# EUROPEAN PATENT SPECIFICATION

(11) **EP 4 181 548 B1**
(45) Date of publication and mention of the grant of the patent: **24.09.2025**
(21) Application number: 22206341.4
(22) Date of filing: 09.11.2022
(51) Int. Cl.: H04W 8/06

(54) **DELETION TIME OF A 5G-GUTI COMMON TO A 3GPP AND NON-3GPP NETWORK IN CASE OF RE-REGISTRATION**
LÖSCHZEIT EINES GEMEINSAMES 3GPP- UND NICHT-3GPP-NETZWERK 5G-GUTI BEI EINER NEUREGISTRIERUNG
TEMPS DE SUPPRESSION D'UN GUTI COMMUN À UN RÉSEAU 3GPP ET NON 3GPP EN CAS DE RÉENREGISTREMENT

(30) Priority: 12.11.2021 US 202163278507 P; 14.10.2022 US 202217966732
(43) Date of publication of application: 17.05.2023
(73) Proprietor: MediaTek Inc., Hsinchu City 30078 (TW)
(72) Inventor: LIN, Yuan-Chieh, 30078 Hsinchu City (TW); LIN, Yu-Hsin, 30078 Hsinchu City (TW)
(74) Representative: Habermann, Hruschka & Schnabel

(56) References cited:
- WO-A1-2020/168275
- "3rd Generation Partnership Project; Technical Specification Group Services and System Aspects; Procedures for the 5G System (5GS); Stage 2 (Release 17)", 29 October 2021 (2021-10-29), XP052087235, Retrieved from the Internet <URL:https://ftp.3gpp.org/tsg_sa/WG2_Arch/Latest_SA2_Specs/DRAFT_INTERIM/Archive/DRAFT_INTERIM_23502-h21_S2-147E_CRs_Implemented.zip DRAFT_INTERIM_23502-h21_S2-147E_CRs_Implemented.docx> [retrieved on 20211029]
- LING XU ET AL: "Remove SSCMI from SOR transparent container", vol. 3GPP CT 1, no. Toulouse, FR; 20221114 - 20221118, 7 November 2022 (2022-11-07), XP052220268, Retrieved from the Internet <URL:https://www.3gpp.org/ftp/tsg_ct/WG1_mm-cc-sm_ex-CN1/TSGC1_139_Toulouse/Docs/C1-226685.zip C1-226685 Remove SSCMI from SOR transparent container.docx> [retrieved on 20221107]
- "3rd Generation Partnership Project; Technical Specification Group Core Network and Terminals; Non-Access-Stratum (NAS) protocol for 5G System (5GS); Stage 3; (Release 17)", vol. CT WG1, no. V17.4.1, 27 September 2021 (2021-09-27), pages 1 - 863, XP052056832, Retrieved from the Internet <URL:https://ftp.3gpp.org/Specs/archive/24_series/24.501/24501-h41.zip 24501-h41.docx> [retrieved on 20210927]

## Description

### CROSS REFERENCE TO RELATED APPLICATION

Priority information about this application is publicly available.

### TECHNICAL FIELD

The disclosed embodiments relate generally to wireless communication systems, and, more particularly, to handling 5G-GUTI deletion time for UE deregistration and registration to the same PLMN or SNPN over both 3GPP and non-3GPP accesses.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (e.g., eNodeBs or eNBs) communicating with a plurality of mobile stations, referred to as user equipments (UEs). The 3rd generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems. The base stations in 5G NR systems are referred to as Next Generation Node-Bs (e.g., gNodeBs or gNBs).

Non-access stratum (NAS) is used to convey non-access-stratum signaling between UE and the Mobility Management Entity (MME) or the Access and Mobility Management Function (AMF) for an LTE/NR access. A NAS signaling connection can be established via an Attach procedure in 4G/LTE or via a registration procedure in 5G/NR, involving UE subscription and identity. A temporary user identity for 5GS-based services, the 5G globally unique temporary identity (5G-GUTI), is used for identification of a registered UE. When the UE is registered to different PLMNs or SNPNs over 3GPP access and non-3GPP access, the UE maintains two 5G-GUTIs, a 5G-GUTI for the registration with a PLMN or SNPN over the 3GPP access and another 5G-GUTI for the registration with another PLMN or SNPN over the non-3GPP access. When the UE is registered to the same PLMN or SNPN over 3GPP and non-3GPP access, the UE and the AMF maintain one 5G-GUTI that is common to both 3GPP and non-3GPP access.

When the UE is required to delete the 5G-GUTI according to a NAS procedure, the UE shall delete the 5G-GUTI only if the UE can be sure that this 5G-GUTI is no longer used in any later procedure. When the UE is required to re-register to the network, the UE follows the procedures of deregister over both accesses, delete the common shared 5G-GUTI, and re-register over both accesses. The UE needs to perform the above procedures in a graceful sequence to ensure that 1) the UE won't have no available 5G-GUTI to use, and 2) the UE won't use multiple 5G-GUTIs for the same network in different procedures.

A solution is sought.

Apparatuses and methods for registration management in information centric networking, ICN, for next generation, NG, cellular networks for the 5G system, 5GS, by are inter alia known from WO 2020/168275 A1, for instance.

Connection, Registration and Mobility Management procedures and Network Function services for the 5GS by end-to-end information flows are inter alia known from "3rd Generation Partnership Project; Technical Specification Group Services and System Aspects; Procedures for the 5G System (5GS); Stage 2 (Release 17)", (20211029), 3GPP DRAFT; DRAFT_INTERIM_23502-H21_S2-147E_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP052087235, for instance.

A method for handling 5G-GUTI deletion time for UE deregistration and registration to the same PLMN or SNPN over both 3GPP and non-3GPP accesses is provided. When a UE is registered to the same PLMN or SNPN over 3GPP and non-3GPP access, the UE and the AMF maintain one 5G-GUTI that is common to both 3GPP and non-3GPP access. When the UE is required to re-register to the network, the UE follows the procedures of deregister over both accesses, delete the common shared 5G-GUTI, and re-register over both accesses. The UE needs to perform the above procedures in a graceful sequence. In one novel aspect, the UE triggers the re-registration (either over 3GPP or non-3GPP access) after the completion of deregistration over both 3GPP and non-3GPP access. In addition, the UE deletes the common 5G-GUTI only after the completion of deregistration over both 3GPP and non-3GPP access.

The invention is defined by the appended claims.

### BRIEF DESCRIPTION OF THE DRAWINGS

In the accompanying drawings like numerals indicate like components.
Figure 1 illustrates a user equipment (UE) and a 5G network handling 5G-GUTI deletion, de-registration, and re-registration to the same Public Land Mobile Network or Standalone non-public Network (PLMN/SNPN) over both 3GPP and non-3GPP access types in accordance with one novel aspect.
Figure 2 is a simplified block diagram of a UE and a network entity in accordance with various embodiments of the present invention.
Figure 3 illustrates one example of the timing on UE performing deregistration over different access types and the deletion of a shared 5G-GUTI.
Figure 4 illustrates one embodiment of a graceful sequence for performing 5G-GUTI deletion, UE registration and deregistration over both 3GPP and non-3GPP accesses in accordance with one novel aspect.
Figure 5 illustrates a sequence flow between a UE and a 5GS for performing re-registration to the same PLMN/SNPN over both 3GPP and non-3GPP access types in accordance with one novel aspect.
Figure 6 is a flow chart of a first method of performing re-registration to the same PLMN/SNPN over both 3GPP and non-3GPP access types.
Figure 7 is a flow chart of a second method of performing re-registration to the same PLMN/SNPN over both 3GPP and non-3GPP access types in accordance with one novel aspect of the current invention.

### DETAILED DESCRIPTION

Reference will now be made in detail to some embodiments of the invention, examples of which are illustrated in the accompanying drawings.

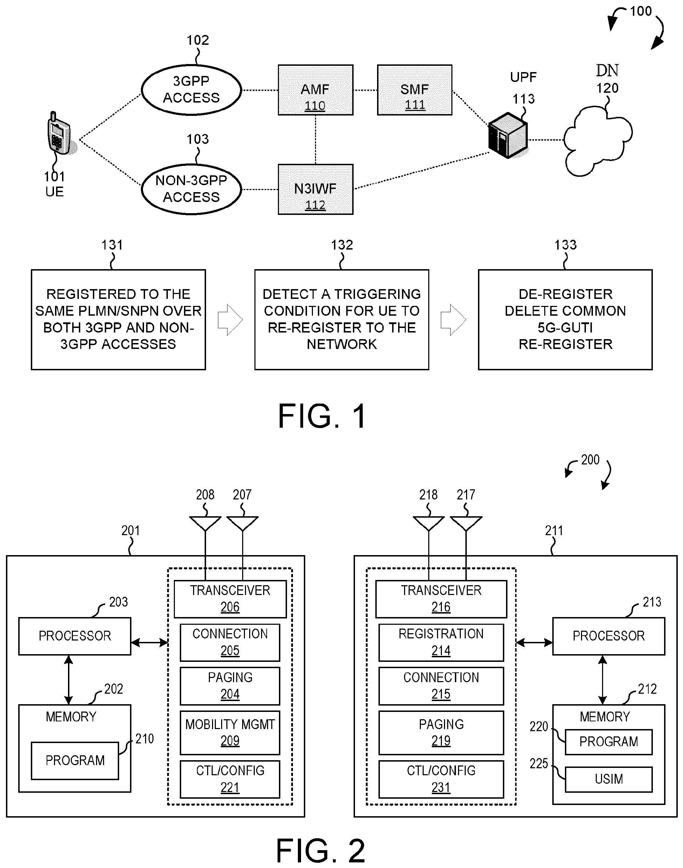

Figure 1 illustrates a user equipment (UE) and a 5G network 100 handling 5G-GUTI deletion, de-registration, and re-registration to the same Public Land Mobile Network or Standalone non-public Network (PLMN/SNPN) over both 3GPP and non-3GPP access types. In 3GPP network, a plurality of base stations, e.g., Next Generation Node-Bs (gNodeBs or gNBs) communicating with a plurality of mobile stations referred as user equipment (UEs). 5G new radio (NR) network 100 includes a UE 101, a 3GPP access 102 (e.g., a 3GPP radio access network (RAN)), a non-3GPP access 103 (e.g., a non-3GPP RAN), an access and mobility management function (AMF) 110, a session management function (SMF) 111, a non-3GPP interworking function (N3IWF) 112, a user plane function (UPF) 113, and a data network 120. The AMF 110 communicates with the base stations in the 3GPP access 102, the SMF 111, and the UPF 113 for access and mobility management of wireless access devices in the 5G network 100. The SMF 111 is primarily responsible for interacting with the decoupled data plane, creating, updating, and removing PDU sessions and managing session context with the UPF 113. The N3IWF 112 interfaces to 5G core network control plane functions.

In Access Stratum (AS) layer, an RAN provides radio access for the UE 101 via a radio access technology (RAT). In Non-Access Stratum (NAS) layer, the AMF 110 and the SMF 111 communicate with RAN and 5GC for access and mobility management and PDU session management of wireless access devices in the 5G network 100. The 3GPP access 102 may include base stations (gNBs or eNBs) providing radio access for the UE 101 via various 3GPP RATs including NR, EUTRA, or 3G/2G. The non-3GPP access 103 may include access points (APs) providing radio access for the UE 101 via non-3GPP RAT including WiFi. The UE 101 can obtain access to data network 120 through 3GPP access 102, AMF 110, SMF 111, and UPF 113. The UE 101 can obtain access to data network 120 through non-3GPP access 103, N3IWF 112, AMF 110, SMF 111, and UPF 113. The UE 101 may be equipped with a single radio frequency (RF) module or transceiver or multiple RF modules or transceivers for services via different RATs/CNs. In some examples, UE 101 may be a smart phone, a wearable device, an Internet of Things (IoT) device, a tablet, etc..

The NAS layer is used to convey non-radio (non-access-stratum) signaling between UE and the AMF for NR access or non-3GPP access. A NAS signaling connection can be established via a registration procedure in 5G/NR, involving UE subscription and identity. A temporary user identity for 5GS-based services, the 5G-GUTI, is used for identification of a registered UE. When the UE is registered to different PLMNs or SNPNs over 3GPP access and non-3GPP access, the UE maintains two 5G-GUTIs, a 5G-GUTI for the registration with a PLMN or SNPN over the 3GPP access and another 5G-GUTI for the registration with another PLMN or SNPN over the non-3GPP access. When the UE is registered to the same PLMN or SNPN over 3GPP and non-3GPP access, the UE and the AMF maintain one 5G-GUTI that is common to both 3GPP and non-3GPP access. When the UE is required to delete the 5G-GUTI according to a NAS procedure, the UE shall delete the 5G-GUTI only if the UE can be sure that this deleted 5G-GUTI is no longer used in any later procedure.

In the example of Figure 1, UE 101 is registered to the same PLMN/SNPN over 3GPP and non-3GPP access (step 131). UE then detects a triggering condition to re-register to the network (step 132). For example, UE 101 receives a DL NAS TRANSPORT message with Payload container type IE is set to "UE parameters update transparent container" and the Payload container IE successfully passes the integrity check. UE parameters update list includes a UE-parameters update data set with UE-parameters update data set type indicating "Routing indicator update data", UE receives a REFRESH command from the UICC, and the REG bit of the UE parameters update header in the UE parameters update transparent container IE is set to "re-registration requested". At the moment, UE registered to both 3GPP and non-3GPP access at the same PLMN, now the UE needs to deregister from 5GS, delete the common 5G-GUTI, and registers back to 5GS.

Note that UE 101 has a 5G-GUTI that is common to the same PLMN or SNPN (because UE registered to same PLMN or SNPN over 3GPP and non-3GPP access). When the UE is required to re-register to the network, the UE follows the procedures of deregister over both accesses, delete the common shared 5G-GUTI, and re-register over both accesses (step 133). The UE needs to perform the above procedures in a graceful sequence to ensure that 1) the UE won't have no available 5G-GUTI to use in any procedure that requires the usage of the original 5G-GUTI, and 2) the UE won't use multiple 5G-GUTIs for the same network in different procedures. In one novel aspect, UE 101 triggers the re-registration (either over 3GPP or non-3GPP access) after the completion of deregistration over both 3GPP and non-3GPP access. In addition, UE 101 deletes the common 5G-GUTI only after the completion of deregistration over both 3GPP and non-3GPP access.

Figure 2 is a simplified block diagram of wireless devices 201 and 211 in accordance with embodiments of the present invention. For wireless device 201 (e.g., a network entity AMF), antennae 207 and 208 transmit and receive radio signal. RF transceiver module 206, coupled with the antennae, receives RF signals from the antennae, converts them to baseband signals and sends them to processor 203. RF transceiver 206 also converts received baseband signals from the processor, converts them to RF signals, and sends out to antennae 207 and 208. Processor 203 processes the received baseband signals and invokes different functional modules and circuits to perform features in wireless device 201. Memory 202 stores program instructions and data 210 to control the operations of device 201.

Similarly, for wireless device 211 (e.g., a user equipment), antennae 217 and 218 transmit and receive RF signals. RF transceiver module 216, coupled with the antennae, receives RF signals from the antennae, converts them to baseband signals and sends them to processor 213. The RF transceiver 216 also converts received baseband signals from the processor, converts them to RF signals, and sends out to antennae 217 and 218. Processor 213 processes the received baseband signals and invokes different functional modules and circuits to perform features in UE 211. Memory 212 stores program instructions and data 220 and USIM card 225 to control the operations of UE 211.

The wireless devices 201 and 211 also include several functional modules and circuits that can be implemented and configured to perform embodiments of the present invention. In the example of Figure 2, wireless device 201 is an AMF that includes a NAS singling connection handling module 205, a paging module 204, a mobility management module 209, and a control and configuration circuit 221. Wireless device 211 is a UE that includes a connection handling module 215, a registration module 214 (for Registration handling), a paging and mobility handling module 219, and a control and configuration circuit 231. Note that a wireless device may be both a transmitting device and a receiving device. The different functional modules and circuits can be implemented and configured by software, firmware, hardware, and any combination thereof. The function modules and circuits, when executed by the processors 203 and 213 (e.g., via executing program codes 210 and 220), allow AMF 201 and UE 211 to perform embodiments of the present invention.

In one example, UE 211 performs registration and deregistration with the network via registration module 214, establishes signaling connection via connection handling circuit 215, monitors paging via paging module 219, and obtains configuration information via control and configuration circuit 231. In one example, when the UE is required to re-register to the same network, the UE follows the procedures of deregister over both accesses, delete the common shared 5G-GUTI, and re-register over both accesses. In one novel aspect, the UE triggers the re-registration (either over 3GPP or non-3GPP access) after the completion of deregistration over both 3GPP and non-3GPP access. In addition, the UE deletes the common 5G-GUTI only after the completion of deregistration over both 3GPP and non-3GPP access.

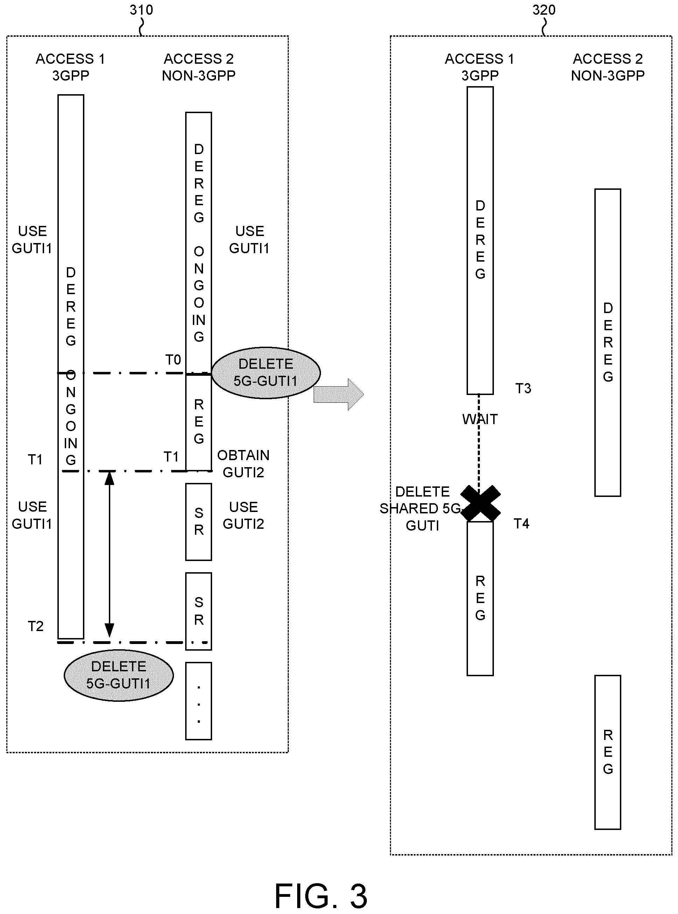

Figure 3 illustrates one example of the timing on UE performing deregistration over different access types and the deletion of a shared 5G-GUTI. Under certain scenario of Figure 3, a UE is registered to the same PLMN or SNPN over both 3GPP (e.g., access 1) and non-3GPP (e.g., access 2), and the UE has a shared 5G-GUTI (e.g., 5G-GUTI1) common to the same PLMN or SNPN. The UE is then required to perform re-registration to the network. For example, the UE receives a DL NAS TRANSPORT message with Payload container type IE is set to "UE parameters update transparent container" and the Payload container IE successfully passes the integrity check. UE parameters update list includes a UE-parameters update data set with UE-parameters update data set type indicating "Routing indicator update data", UE receives a REFRESH command from the UICC, and the REG bit of the UE parameters update header in the UE parameters update transparent container IE is set to "re-registration requested".

The UE needs to perform the following procedures: (1) UE deregisters from/over 3GPP access (2) UE deregisters from/over non-3GPP access (3) UE deletes 5G-GUTI (4) UE registers over 3GPP access (5) UE registers over non-3GPP access. If the above procedures are not performed in certain sequence, then such handling may have problems. In a first example, if the deletion of 5G-GUTI is executed when the first de-registration is finished/started but the second de-registration is not finished/started, this will cause there is no available 5G-GUTI can be used in the second de-registration. In a second example, if one of the de-registrations takes a long time, e.g., when guard timer for deregistration request is timeout under abnormal case. This will cause the same UE uses different 5G-GUTI in the same network during different procedures, which will then result in the requirement for the network to support multiple UE contexts.

As depicted in 310 of Figure 3, UE uses a first 5G-GUTI1 after registration over both 3GPP (e.g., access 1) and non-3GPP accesses (e.g., access 2). The deregistration over non-3GPP access is completed before the deregistration over 3GPP access. In a first example, if the UE deletes the 5G-GUTI1 at time T0 after deregistration from non-3GPP access is completed, then the UE has no available 5G-GUTI in the deregistration procedure over 3GPP access. In a second example, if the UE does not delete 5G-GUTI at time T0 and obtains a second 5G-GUTI2 at time T1 after registering over non-3GPP access, and the UE continues to use 5G-GUTI1 before de-registration over 3GPP access is completed at time T2, it will result in the UE uses 5G-GUTI1 and 5G-GUTI2 from T1 to T2 in the same network during different procedures.

In one novel aspect, the above procedures are performed by the UE in a graceful sequence. If the UE is registered over 3GPP access, then the UE shall wait until the emergency services over 3GPP access, if any, are completed, enter IDLE or INACTIVE mode, perform de-registration procedure, and then wait until the de-registration procedure over non-3GPP is completed before deleting its 5G-GUTI if the UE is registered to the same PLMN or SNPN on non-3GPP access, and then initiate a registration procedure for initial registration. As depicted in 320 of Figure 3, the UE completes de-registration from 3GPP access at time T3. Since the UE has not completed de-registration from non-3GPP access, the UE waits until time T4 and then deletes the shared 5G-GUTI. After deleting the shared 5G-GUTI, the UE can start performing re-registration procedure over either 3GPP or non-3GPP access, i.e., the UE can re-register to 3GPP access only after the de-registration over non-3GPP access is completed.

Similarly, if the UE is registered over non-3GPP access, then the UE shall wait until the emergency services are completed, enter IDLE mode over non-3GPP access, perform de-registration procedure, and then wait until the de-registration procedure over 3GPP access is completed before deleting its 5G-GUTI if the UE is registered to the same PLMN or SNPN on 3GPP access, and then initiate a registration procedure for initial registration over non-3GPP access, i.e., the UE can re-register to non-3GPP access only after the de-registration over 3GPP access is completed.

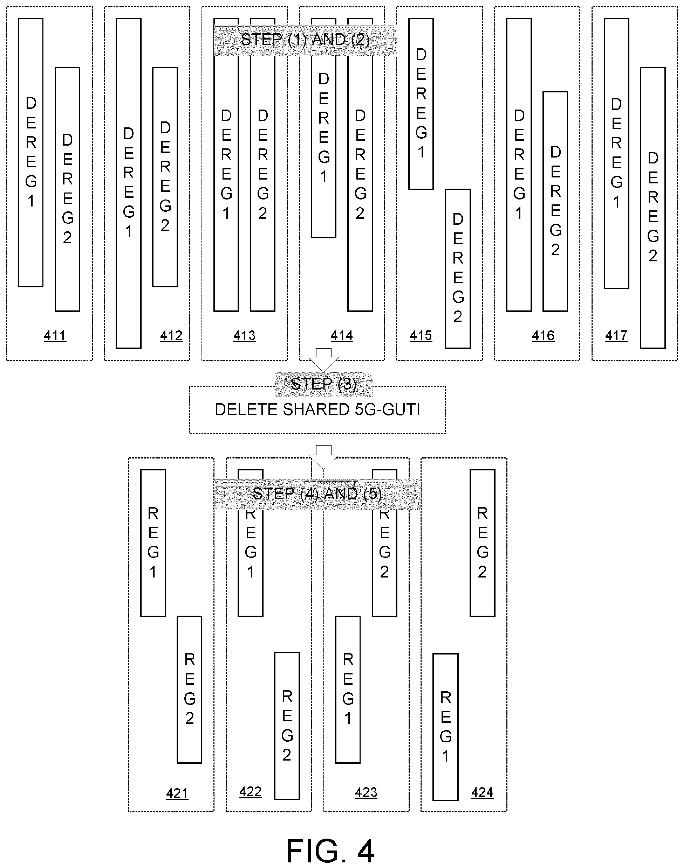

Figure 4 illustrates one embodiment of a graceful sequence for performing 5G-GUTI deletion, UE registration and deregistration over both 3GPP and non-3GPP accesses in accordance with one novel aspect. After a UE registered to the same PLMN/SNPN over both 3GPP and non-3GPP access and sharing a common 5G-GUTI, the UE may be required to re-register to two accesses of the network under certain scenario. The UE then needs to perform the following procedures: (1) UE deregisters from/over 3GPP access (2) UE deregisters from/over non-3GPP access (3) UE deletes a common 5G-GUTI (4) UE registers over 3GPP access (5) UE registers over non-3GPP access. In accordance with one novel aspect, the UE can only perform step (3) after the completion of both steps (1) and step (2), e.g., the deletion of the common 5G-GUTI can only happen after the UE has completed de-registration from both 3GPP and non-3GPP accesses. Furthermore, the UE can only perform step (4) or step (5) after steps (1) and step (2) are both completed, e.g., the UE can preform re-registration over either 3GPP or non-3GPP access, or both, only after the UE has completed de-registration from both 3GPP and non-3GPP accesses. In other words, UE can perform re-registration over either 3GPP or non-3GPP access only after the common 5G-GUTI is deleted in step (3) after performing steps (1) and (2).

Figure 4 has depicted some possible scenarios of the above procedures (1) to (5) in a graceful sequence as described. DEREG1 represents deregistration over 3GPP access, DEREG2 represents deregistration over non-3GPP access, REG1 represents registration over 3GPP access, and REG2 represents registration over non-3GPP access. Some different scenarios of the de-registration procedures (steps (1) and (2)) are depicted by 411-417. In 411, UE starts DEREG1 first and completes DEREG1 before DEREG2,. In 412, UE starts DEREG1 first and completes DEREG1 after DEREG2, where DEREG1 is longer than DEREG2. In 413, UE starts and completes DEREG1 and DEREG2 at the same time, where DEREG1 is the same as DEREG2. In 414, UE starts DEREG1 and DEREG2 at the same time, and completes DEREG1 is before DEREG2. In 415, UE starts DEREG2 until after DEREG1 is completed. In 416, UE starts DEREG1 first and completes DEREG1 and DEREG2 at the same time. In 417, UE starts DEREG1 first and completes DEREG1 before DEREG2, where DEREG1 is the same as DEREG2. Note that the order of DEREG1 and DEREG2 is interchangeable. The different scenarios of the registration procedures (steps (4) and (5)) are depicted by 421-424, which are performed after or at the same time as step (3). In 421, UE performs REG1 first and performs REG2 upon the completion of REG1. In 422, UE performs REG1 first and performs REG2 sometime after the completion of REG1. In 423, UE performs REG2 first and performs REG1 upon the completion of REG2. In 424, UE performs REG2 first and performs REG1 sometime after the completion of REG2.

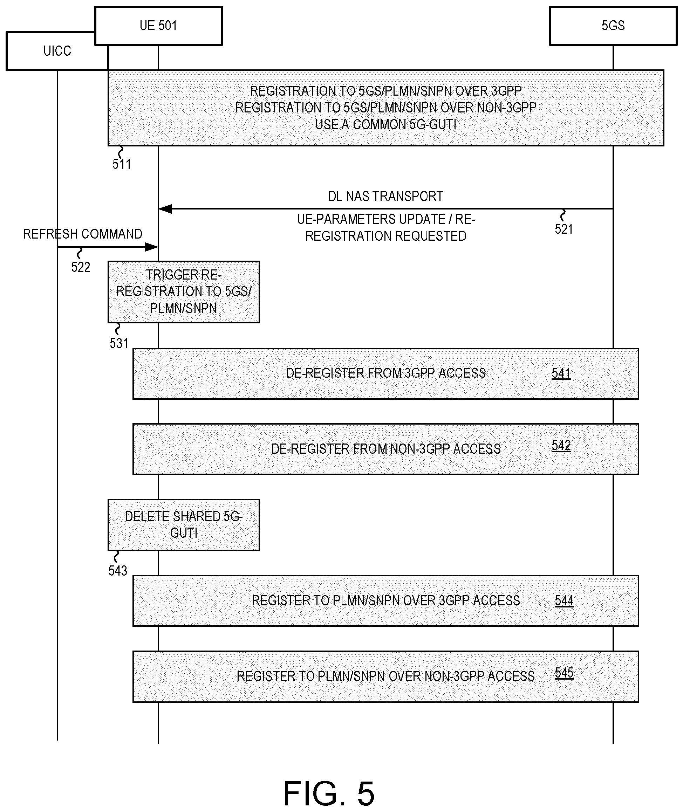

Figure 5 illustrates a sequence flow between a UE and a 5GS for performing re-registration to the same PLMN/SNPN over both 3GPP and non-3GPP access types in accordance with one novel aspect. In step 511, UE 501 registers to the same PLMN/SNPN in 5GS over both 3GPP access and non-3GPP access. UE 501 uses/maintains a common 5G-GUTI in the same network. In step 521, UE 501 receives a DL NAS TRANSPORT message with Payload container type IE is set to "UE parameters update transparent container" and the Payload container IE successfully passes the integrity check. In step 522, UE 501 receives a REFRESH command from the UICC, and the REG bit of the UE parameters update header in the UE parameters update transparent container IE is set to "re-registration requested". Accordingly, in step 531, UE 501 determines that the UE is required to re-register to the network. In step 541, UE 501 performs deregistration from 3GPP access. In step 542, UE 501 performs deregistration from non-3GPP access. In step 543, UE 501 deletes the shared 5G-GUTI after both deregistration procedures are completed. In step 544, UE 501 performs registration to the PLMN/SNPN over 3GPP access. In step 545, UE 501 performs registration to the same PLMN/SNPN over non-3GPP access.

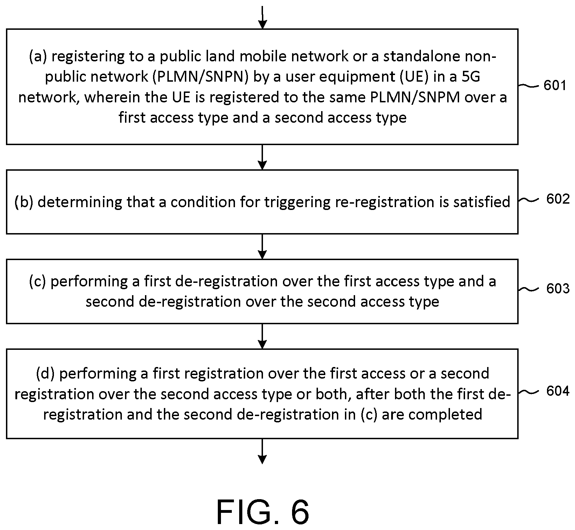

Figure 6 is a flow chart of a first method of performing re-registration to the same PLMN/SNPN over both 3GPP and non-3GPP access types. In step 601, a UE registers to a public land mobile network or a standalone non-public network (PLMN/SNPN) in a 5G network, wherein the UE is registered to the same PLMN/SNPM over a first access type and a second access type. In step 602, the UE determines that a condition for triggering re-registration is satisfied. In step 603, the UE performs a first de-registration over the first access type and a second de-registration over the second access type. In step 604, the UE performs a first registration over the first access or a second registration over the second access type or both, after both the first de-registration and the second de-registration are completed.

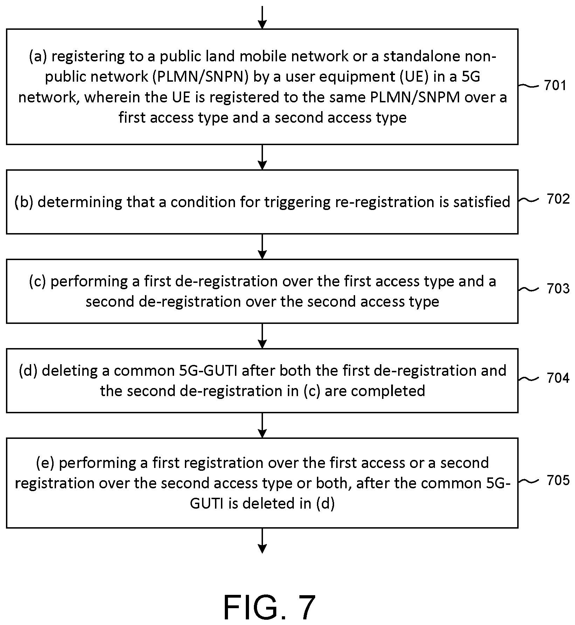

Figure 7 is a flow chart of a second method of performing re-registration to the same PLMN/SNPN over both 3GPP and non-3GPP access types in accordance with one novel aspect of the current invention. In step 701, a UE registers to a public land mobile network or a standalone non-public network (PLMN/SNPN) in a 5G network, wherein the UE is registered to the same PLMN/SNPM over a first access type and a second access type. In step 702, the UE determines that a condition for triggering re-registration is satisfied. In step 703, the UE performs a first de-registration over the first access type and a second de-registration over the second access type. In step 704, the UE deletes a common 5G-GUTI after both the first de-registration and the second de-registration are completed. In step 705, the UE performs a first registration over the first access or a second registration over the second access type or both, after the common 5G-GUTI is deleted.

Although the present invention is described above in connection with certain specific embodiments for instructional purposes, the present invention is not limited thereto. Accordingly, various modifications, adaptations, and combinations of various features of the described embodiments can be practiced.

## Claims

1. A method carried out by a User Equipment UE comprising:
registering to a public land mobile network or a standalone non-public network, PLMN/SNPN, by the UE (101), in a 5G network (100), wherein the UE (101) is registered to the same PLMN/SNPM over a 3GPP access network (102), referred to as first access type, and a non-3GPP access network (103), referred to as second access type, using a common 5G globally unique temporary identity, 5G-GUTI (701);
determining that a condition for triggering re-registration is satisfied (702); and
performing a first de-registration over the first access type and a second de-registration over the second access type (703),
**characterized by** the method further comprising:
deleting the common 5G-GUTI after both the first de-registration and the second de-registration are completed (704); and
performing a first registration over the first access type or a second registration over the second access type or both, after the common 5G-GUTI is deleted (705).

2. The method of Claim 1, wherein the UE (501) receives a downlink NAS TRANSPORT message (521) comprising a UE-parameters-update header to trigger re-registration to the network.

3. The method of Claim 2, wherein the triggering condition is satisfied when the UE receives a REFRESH COMMAND (522), and the UE-parameters-update header indicates re-registration requested.

4. A User Equipment, UE (211), comprising:
a registration handling circuit (214) that is adapted to register to a public land mobile network or a standalone non-public network, PLMN/SNPN, in a 5G network (200), wherein the UE (211) is registered to the same PLMN/SNPM over 3GPP access network (102), referred to as a first access type, and a non-3GPP access network (103), referred to as second access type using a common 5G globally unique temporary identity, 5G-GUTI;
a control circuit (231) that is adapted to determine that a condition for triggering re-registration is satisfied; and
a de-registration handling circuit (214) that is adapted to perform a first de-registration over the first access type and a second de-registration over the second access type, wherein the UE (211) is adapted to perform a first registration over the first access or a second registration over the second access type or both, **characterized by** the UE (211) being further adapted to
delete the common 5G-GUTI after performing both the first de-registration and the second de-registration, or to
delete the common 5G-GUTI before performing the first registration or the second registration or both.

5. The UE of Claim 4, wherein the UE (501) is adapted to receive a downlink NAS TRANSPORT message (521) comprising a UE-parameters-update header to trigger re-registration to the network.

6. The UE (501) of Claim 5, wherein the triggering condition is satisfied when the UE (501) receives a REFRESH COMMAND (522), and the UE-parameters-update header indicates re-registration requested.

## Patentansprüche

1. Verfahren, das von einem Benutzergerät UE durchgeführt wird, aufweisend:
Registrieren bei einem öffentlichen landgestützen Mobilfunknetzwerk oder einem eigenständigen nicht-öffentlichen Netzwerk, PLMN/SNPN, durch das UE (101) in einem 5G-Netzwerk (100), wobei das UE (101) bei demselben PLMN/SNPM über ein 3GPP-Zugangsnetzwerk (102), das als erster Zugangstyp bezeichnet wird, und über ein Nicht-3GPP-Zugangsnetzwerk (103), das als zweiter Zugangstyp bezeichnet wird, unter Verwendung einer gemeinsamen globalen eindeutigen temporären 5G-Identität, 5G-GUTI (701), registriert wird;
Bestimmen, dass eine Bedingung für das Auslösen einer Neuregistrierung erfüllt ist (702); und
Durchführen einer ersten Deregistrierung über den ersten Zugangstyp und einer zweiten Deregistrierung über den zweiten Zugangstyp (703),
**dadurch gekennzeichnet, dass** das Verfahren des Weiteren aufweist:
Löschen der gemeinsamen 5G-GUTI, nachdem sowohl die erste Deregistrierung als auch die zweite Deregistrierung abgeschlossen sind (704); und
Durchführen einer ersten Registrierung über den ersten Zugangstyp oder einer zweiten Registrierung über den zweiten Zugangstyp oder beides, nachdem die gemeinsame 5G-GUTI gelöscht ist (705).

2. Verfahren nach Anspruch 1, bei dem das UE (501) eine Downlink-NAS-TRANSPORT-Nachricht (521) empfängt, die einen UE-Parameter-Update-Header aufweist, um eine erneute Registrierung im Netzwerk auszulösen.

3. Verfahren nach Anspruch 2, bei dem die Auslösebedingung erfüllt ist, wenn das UE ein REFRESH COMMAND (522) empfängt und der UE-Parameter-Update-Header eine angeforderte Neuregistrierung anzeigt.

4. Benutzergerät, UE (211), aufweisend:
eine Registrierungshandhabungsschaltung (214), die eingerichtet ist, um sich bei einem öffentlichen landgestützten Mobilfunknetzwerk oder einem eigenständigen nicht-öffentlichen Netzwerk, PLMN/SNPN, in einem 5G-Netzwerk (200) zu registrieren, wobei das UE (211) über ein 3GPP-Zugangsnetzwerk (102), das als ein erster Zugangstyp bezeichnet wird, und ein Nicht-3GPP-Zugangsnetzwerk (103), das als ein zweiter Zugangstyp bezeichnet wird, unter Verwendung einer gemeinsamen globalen eindeutigen temporären 5G-Identität, 5G-GUTI, bei demselben PLMN/SNPN registriert ist;
eine Steuerschaltung (231), die eingerichtet ist, festzustellen, dass eine Bedingung für das Auslösen einer Neuregistrierung erfüllt ist; und
eine Deregistrierungs-Handhabungsschaltung (214), die eingerichtet ist, um eine erste Deregistrierung über den ersten Zugangstyp und eine zweite Deregistrierung über den zweiten Zugangstyp durchzuführen, wobei das UE (211) eingerichtet ist, um eine erste Registrierung über den ersten Zugang oder eine zweite Registrierung über den zweiten Zugangstyp oder beide durchzuführen,
**dadurch gekennzeichnet, dass** das UE (211) des Weiteren eingerichtet ist, um
die gemeinsame 5G-GUTI zu löschen, nachdem sowohl die erste Deregistrierung als auch die zweite Deregistrierung erfolgt sind, oder
die gemeinsame 5G-GUTI zu löschen, bevor die erste Registrierung oder die zweite Registrierung oder beide durchgeführt werden.

5. UE nach Anspruch 4, bei dem das UE (501) so eingerichtet ist, dass es eine Downlink-NAS-TRANSPORT-Nachricht (521) empfängt, die einen UE-Parameter-Update-Header aufweist, um eine Neuregistrierung im Netzwerk auszulösen.

6. UE (501) nach Anspruch 5, bei dem die Auslösebedingung erfüllt ist, wenn das UE (501) ein REFRESH COMMAND (522) empfängt und der UE-Parameter-Update-Header eine angeforderte Neuregistrierung anzeigt.

## Revendications

1. Procédé mis en œuvre par un dispositif utilisateur UE, comprenant:
enregistrer auprès d'un réseau mobile public terrestre ou d'un réseau autonome non public, PLMN/SNPN, par lequel l'UE (101) est connecté à un réseau 5G (100), l'UE (101) étant connecté au même PLMN/SNPM via un réseau d'accès 3GPP (102), désigné comme premier type d'accès, et via un réseau d'accès non 3GPP (103), désigné comme deuxième type d'accès, à l'aide d'une identité temporaire unique globale commune 5G, 5G-GUTI (701);
déterminer qu'une condition pour déclencher un réenregistrement est remplie (702); et
effectuer une première désenregistrement via le premier type d'accès et une deuxième désenregistrement via le deuxième type d'accès (703),
**caractérisé en ce que** le procédé comprend en outre:
supprimer du 5G-GUTI commun après que la première désenregistrement et la deuxième désenregistrement ont été effectuées (704); et
exécuter d'un premier enregistrement via le premier type d'accès ou d'un deuxième enregistrement via le deuxième type d'accès, ou les deux, après la suppression du 5G-GUTI commun (705).

2. Procédé selon la revendication 1, dans lequel l'UE (501) reçoit un message NAS-TRANSPORT en liaison descendante (521) comprenant un en-tête de mise à jour des paramètres UE afin de déclencher une réenregistrement dans le réseau.

3. Procédé selon la revendication 2, dans lequel la condition de déclenchement est remplie lorsque l'UE reçoit une COMMAND REFRESH (522) et que l'en-tête de mise à jour des paramètres UE indique une réenregistrement demandé.

4. Dispositif utilisateur, UE (211), comprenant:
un circuit de gestion d'enregistrement (214) qui est configuré pour s'enregistrer auprès d'un réseau mobile public terrestre ou d'un réseau autonome non public, PLMN/SNPN, dans un réseau 5G (200), l'UE (211) étant connecté via un réseau d'accès 3GPP (102), désigné comme un premier type d'accès, et un réseau d'accès non 3GPP (103) désigné comme un deuxième type d'accès, à l'aide d'une identité 5G temporaire unique globale commune, 5G-GUTI, est enregistré dans le même PLMN/SNPN;
un circuit de commande (231) configuré pour déterminer qu'une condition de déclenchement d'un réenregistrement est remplie; et
un circuit de gestion de désenregistrement (214) configuré pour effectuer un premier désenregistrement via le premier type d'accès et un deuxième désenregistrement via le deuxième type d'accès, dans lequel l'UE (211) est configuré pour effectuer un premier enregistrement via le premier type d'accès ou un deuxième enregistrement via le deuxième type d'accès, ou les deux,
**caractérisé en ce que** l'UE (211) est en outre configuré pour
supprimer le GUTI 5G commun après que la première type d'accès et la deuxième type d'accès ont été effectuées, ou
supprimer le GUTI 5G commun avant que le premier enregistrement ou le deuxième enregistrement ou les deux soient effectués.

5. UE selon la revendication 4, dans lequel l'UE (501) est configuré pour recevoir un message NAS-TRANSPORT en liaison descendante (521) qui comprend un en-tête de mise à jour des paramètres UE afin de déclencher un réenregistrement dans le réseau.

6. UE (501) selon la revendication 5, dans lequel la condition de déclenchement est remplie lorsque l'UE (501) reçoit une COMMAND REFRESH (522) et que l'en-tête de mise à jour des paramètres UE indique une réenregistrement demandé.
